# EUROPEAN PATENT SPECIFICATION

(11) **EP 2 977 631 B1**
(45) Date of publication and mention of the grant of the patent: **13.06.2018**
(21) Application number: 14200744.2
(22) Date of filing: 31.12.2014
(51) Int. Cl.: F16D 7/02, F16D 3/14, F16H 9/04, F16D 41/066

(54) **Pulley for alternator**
Riemenscheibe für Drehstromgenerator
Poulie d'alternateur

(30) Priority: 14.07.2014 TW 103124191; 14.07.2014 TW 103124193; 14.07.2014 TW 103124194
(43) Date of publication of application: 27.01.2016
(73) Proprietor: Victory Industrial Corporation, New Taipei City 22149 (TW)
(72) Inventor: Chang, Hung-Chih, 22149 New Taipei City (TW); Liu, Szu-En, 22149 New Taipei City (TW)
(74) Representative: Perry, Clifford

(56) References cited:
- WO-A1-2004/011818
- WO-A1-2005/057037
- WO-A1-2011/147024
- WO-A1-2012/061936

## Description

### BACKGROUND OF THE INVENTION

The present invention relates to a pulley for an alternator, and in particular, to a pulley for an automotive alternator.

An alternator is a type of generator that can produce an alternating current by converting mechanical energy into electrical energy. An automotive alternator converts mechanical energy of an engine into electrical energy to charge a battery, so as to supply electrical power to other electrical appliances on the automobile, and start a motor to rotate the engine.

An alternator generally has an annular stator and a rotor received in the annular stator. A wire is wound on the stator, and the rotor rotates rapidly in the stator so that the wire moves relative to a magnetic field generated by the rotor, and an induced electromotive force (voltage) is generated in the wire.

An automotive alternator is usually utilized by an engine driving a belt. The belt is wound on a pulley, and the pulley is connected to a rotor so as to drive the rotor to rotate. However, in conventional alternator design, when an engine starts, or accelerates or decelerates quickly in an instant, a waveform changes significantly at the moment the generator charges a battery, and it cannot be stabilized. In addition, one side of the belt wound on the pulley is tight, and the other side thereof is slack. The tension of the slack-side belt is low, and therefore a tensioner is disposed thereon to adjust the tension of the belt. However, when a rotation speed at which the engine transmits power changes suddenly, because the pulley of the generator is locked by a nut and the belt is made of a flexible material and cannot reflect the rotation speed immediately, a slip is easily caused between the belt and the pulley. Moreover, the fluctuation of the rotation speed causes the belt to bear not only a repeated stress but also a centrifugal force that is applied on the belt when the pulley rotates. The value of the centrifugal force changes with the rotation speed, and therefore the belt is often affected by adverse factors of an internal micro tension, which pulls the belt, and external large-amplitude shaking. Published PCT application WO/2005/057037 discloses a decoupler assembly for transferring rotary movement between an engine driven shaft and a serpentine belt. The decoupler includes a hub configured to be assembled to the shaft. The hub has a helical first slot formed therein. A pulley is rotatably coupled to the hub. A carrier is mounted on the hub and includes a helical second slot formed therein, as well as an anti-ramp up boss formed thereon. A thrust plate is fixed to the hub and has a slot formed therein. A torsion spring is compressed between a hub end retained in the helical first slot and a carrier end retained in the helical second slot for transferring torque between the hub and carrier. The anti-ramp up boss travels within the slot formed in the thrust plate for limiting rotation between the carrier and thrust plate and preventing rotation of the torsion spring relative to the hub and carrier.

Published PCT application WO/2011/147024 discloses a decoupler assembly for between an endless drive element and a shaft. The endless drive element may be, for example, an accessory drive belt from a vehicular engine. The shaft may be, for example, the input shaft of a belt-driven accessory, such as an alternator or a compressor. The decoupler assembly includes a hub that mounts to the shaft, a pulley that is rotatable with respect to the hub, a dampening spring and a clutch member. A part of the pulley is supported on a pulley support surface on the hub. There is a gap between the pulley and the pulley support surface. The gap has lubricant therein to facilitate sliding between the pulley and the pulley support surface. By eliminating the use of a polymeric bushing between pulley and the hub, there are several advantages that are provided. Published PCT application WO/2012/061936 discloses a decoupler that is positionable between a shaft (eg. for an alternator) and an endless power transmitting element (eg. a belt) on an engine. The decoupler includes a hub that mounts to the shaft, and a pulley that engages the endless power transmitting element, an isolation spring between the hub and the shaft. The decoupler provides at least a selected damping torque between the hub and the pulley.

Published PCT application WO/2004/011818 discloses a decoupler assembly for allowing an alternator to be rotatably driven by a serpentine belt in an engine of an automotive vehicle and for allowing the speed of the belt to oscillate relative to the alternator. A hub is fixedly carried by a drive shaft from the alternator for rotation therewith. A pulley is rotatably journaled to the hub by a ball bearing member. The ball bearing member includes lubricant for minimizing frictional wear therein. A bare, helical clutch spring is operatively coupled between the hub and pulley for transferring rotational movement from the pulley to the hub during acceleration of the pulley relative to the hub by the serpentine belt and for allowing the hub to overrun the pulley during deceleration of the pulley relative to the hub.

### SUMMARY OF THE INVENTION

In view of the deficiency of the prior art, the inventor proposes a pulley for an alternator which can effectively mitigate the vibration or belt slack or damage of the pulley caused by the speed change, thereby improving the overall operating efficiency and service life of the alternator.

To achieve the above objective, a pulley for an alternator according to appended claims 1-14 is herein presented.

For better understanding of the detailed description of the present invention, the features and technical advantages of the present invention are described generally above. The following describes the additional features and advantages of the present invention. Persons skilled in the art should be aware that the disclosed concept and specific implementation manner can be easily used as a basis for modifying or designing other structures for implementing objectives the same as the present invention. Persons skilled in the art should also be aware that such equivalent structures do not depart from the scope of the present invention which are claimed in the patent application scope.

### BRIEF DESCRIPTION OF THE DRAWINGS

For a more thorough understanding of the present invention and advantages of the present invention, the following descriptions are provided with reference to the accompanying drawings, where:
**FIG. 1** is a three-dimensional exploded view of a pulley for an alternator according to the present invention;
**FIG. 2** is a sectional assembled view of a pulley for an alternator according to the present invention;
**FIG. 3** is a schematic structural view of a hollow connecting shaft according to the present invention;
**FIG. 4** is a schematic structural view of a hollow core shaft according to the present invention; and
**FIG. 5** is a schematic view of a rotor of an alternator according to the present invention.

### Meaning of Reference Numerals:

- 10: Pulley
- 20: Joint lever
- 30: Rotor
- 110: Outer wheel
- 111: Axle hole
- 112: Belt groove
- 113: Step portion
- 120: Clutch wheel
- 121: Pivot hole
- 122: Housing
- 123: Rolling member
- 124: Elastic member
- 125: Cap
- 130: Hollow connecting shaft
- 131: First end of the hollow connecting shaft
- 132: Second end of the hollow connecting shaft
- 133: First protruding portion
- 134: Stop wall of the hollow connecting shaft
- 140: Hollow core shaft
- 141: First end of the hollow core shaft
- 142: Second end of the hollow core shaft
- 143: First ball bearing
- 144: Second ball bearing
- 145: Protruding ring of the hollow core shaft
- 146: Second protruding portion
- 147: Stop wall of the hollow core shaft
- 148: Threaded surface
- 150: Elastic element
- 160: Tight-fit component
- 161: Positioning gasket
- 162: C-shaped retaining ring
- 170: Positioning casing
- 171: Protruding ring of the positioning casing
- 181: Oil seal element
- 182: Oil seal element
- 183: Positioning member
- 184: Dust cover
- 185: Positioning member

### DETAILED DESCRIPTION OF EXEMPLARY EMBODIMENTS

The following describes the present invention in the context of the first exemplary embodiment described above. The skilled person will appreciate that the following description is used to describe the present invention and illustrate the advantages thereof, but it does not mean that the present invention is limited to such an embodiment, and in particular, the scope of the present invention includes the second and third exemplary embodiments described above, as well as equivalents thereof.

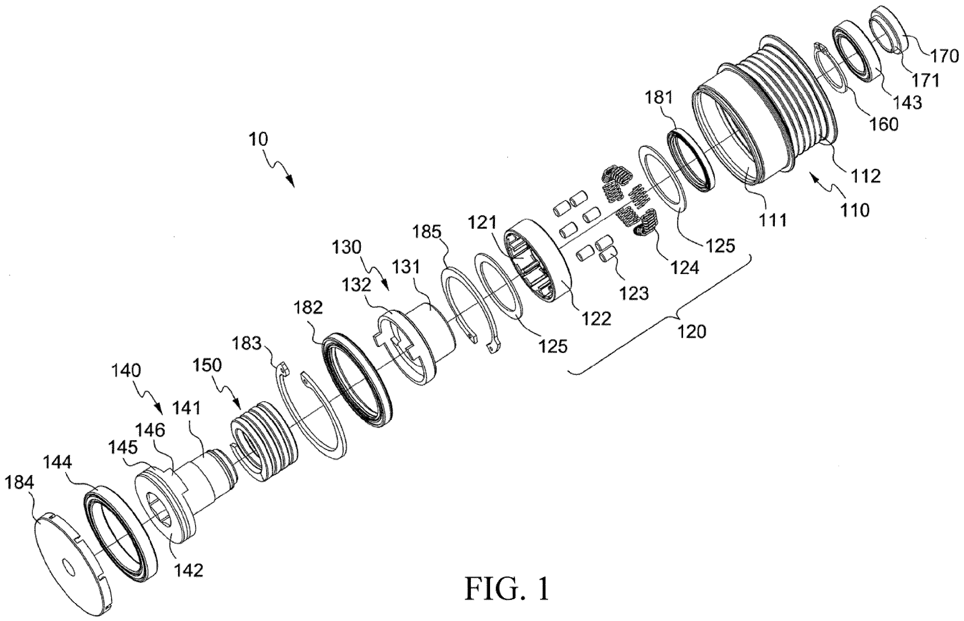

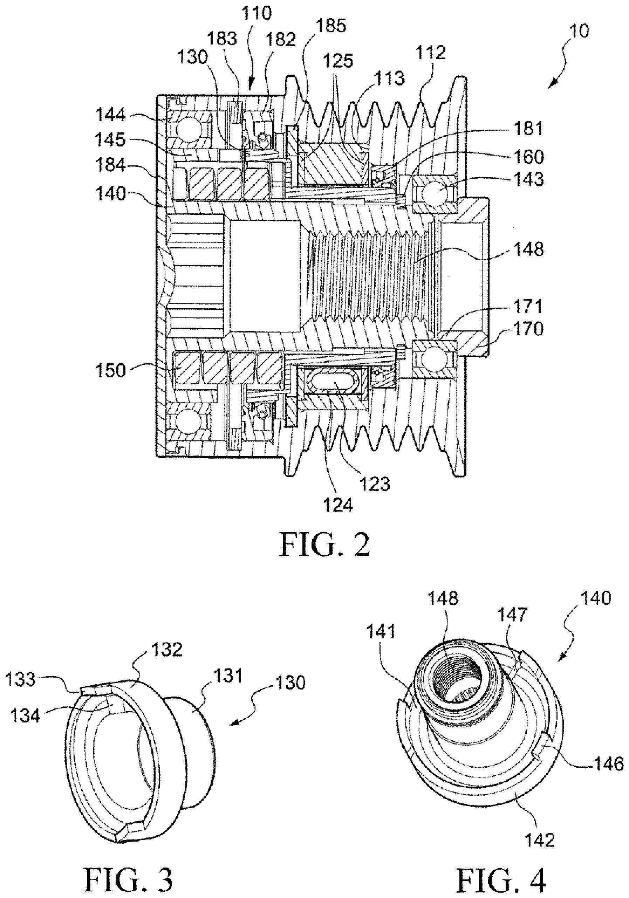

**FIG. 1** and **FIG. 2** are respectively a three-dimensional exploded view and a sectional assembled view of a pulley for an alternator according to the present invention. As shown in FIG. 1 and FIG. 2, a pulley 10 for an alternator according to the present invention mainly includes an outer wheel 110, a clutch wheel 120, a hollow connecting shaft 130, a hollow core shaft 140, an elastic element 150, and a tight-fit component 160. The outer wheel 110 is a wheel-shaped member provided with an axle hole 111 at the center, and is provided with a belt groove 112 on an outer circumferential wall surface thereof and a step portion 113 on an inner circumferential wall surface thereof. The clutch wheel 120 is annular, provided with a pivot hole 121 at the center, and fixedly disposed in the axle hole 111 of the outer wheel 110. For example, a groove may be provided in a concave manner on the inner circumferential wall surface of the outer wheel 110, and an anaerobic adhesive is coated in the groove so that the clutch wheel 120 can be fixedly connected to an inner circumferential wall surface of the axle hole 111 of the outer wheel 110 by means of tight fit and adhesion of the anaerobic adhesive. One end of the clutch wheel 120 abuts against the step portion 113 of the outer wheel 110 to limit an axial position of the clutch wheel 120 and to ensure that an end surface of the clutch wheel 120 is perpendicular to the hollow connecting shaft 130 and the hollow core shaft 140, prevent axial displacement of the clutch wheel 120 during high-speed rotation, and moreover, provide an axial positioning reference during assembly of components in the outer wheel 110, which facilitates positioning during the assembly.

The hollow connecting shaft 130 has a first end 131 and a second end 132. The first end 131 is rotatably disposed in the clutch wheel 120 so that the hollow connecting shaft 130 can maintain a co-rotational relationship with the outer wheel 110 in a first relative rotation direction by means of the clutch wheel 120 (for example, the hollow connecting shaft 130 rotates anticlockwise relative to the outer wheel 110), and it is disassociated from the co-rotational relationship with the outer wheel 110 in a second relative rotation direction to enter an idling state (for example, the hollow connecting shaft 130 rotates clockwise relative to the outer wheel 110), and at this time, the hollow connecting shaft 130 rotates independently of the outer wheel 110. The hollow connecting shaft 130 is provided with a first protruding portion 133 on the second end 132, as shown in **FIG. 3****.**

In a preferred embodiment of the present invention, the clutch wheel 120 has a housing 122, a plurality of rolling members 123, a plurality of elastic members 124, and two caps 125. The clutch wheel 120 is provided with a positioning member 185 on an end opposite to the end abutting against the step portion 113 to limit the axial position of the clutch wheel 120 and prevent the caps 125 of the clutch wheel 120 from falling off. The positioning member may be a C-shaped retaining ring. For the detailed structure and operating principle of the clutch wheel 120, reference may be made to Taiwan Patent Application No. 098129945 filed by the applicant on September 4, 2009. However, the clutch wheel of the present invention is not limited thereto, and any speed-difference clutch apparatus capable of implementing the functions of the clutch wheel 120 described in the present invention may be designed as the clutch wheel 120 of the present invention. Moreover, in the present invention, two ends of the clutch wheel 120 are each provided with an oil seal element 181/182 so as to prevent a liquid (for example, a lubricating oil) in the clutch wheel 120 from permeating and polluting the interior of the pulley 10. Furthermore, a positioning member 183 may be sleeved over one side of the oil seal element 182. The positioning member 183 may be a C-shaped retaining ring, and may be sleeved over an inner side wall surface of the outer wheel 110 in a tight-fit manner, to limit axial positions of the oil seal elements 181 and 182 and the clutch wheel 120.

The hollow core shaft 140 is disposed in the outer wheel 110 and has a first end 141 and a second end 142. A first ball bearing 143 is sleeved over the first end 141, and a second ball bearing 144 is sleeved over the second end 142. The first ball bearing 143 and the second ball bearing 144 are both fixedly connected to the inner circumferential wall surface of the outer wheel 110 (for example, the outer wheel 110 may be provided with two grooves on the inner circumferential wall surface in a concave manner, and an anaerobic adhesive is coated in the grooves so that the first ball bearing 143 and the second ball bearing 144 can be fixedly connected to the inner circumferential wall surface of the axle hole 111 of the outer wheel 110 by means of tight fit and adhesion of the anaerobic adhesive) so that the hollow core shaft 140 is rotatable relative to the outer wheel 110. In addition, the hollow core shaft 140 passes through the hollow connecting shaft 130, and the first end 141 of the hollow core shaft 140 protrudes from the first end 131 of the hollow connecting shaft 130. A protruding ring 145 is annularly arranged at the second end 142 of the hollow core shaft 140. The protruding ring 145 is rotatably arranged on the second end 132 of the hollow connecting shaft 130. A second protruding portion 146 is provided in a protruding manner in a direction towards the hollow connecting shaft 130, and the second protruding portion 146 corresponds to the first protruding portion 133 so that after the hollow connecting shaft 130 and the hollow core shaft 140 rotate by a particular degree relative to each other, the first protruding portion 133 of the hollow connecting shaft 130 contacts the second protruding portion 146 of the hollow core shaft 140, thereby stopping relative rotation between the hollow connecting shaft 130 and the hollow core shaft 140. For example, when the hollow connecting shaft 130 is provided with two first protruding portions 133 at the second end 132, and when the hollow core shaft 140 is provided with three second protruding portions 146 at the second end 142, the hollow core shaft 140 can only rotate clockwise or anticlockwise by 120 degrees relative to the hollow connecting shaft 130 after being sleeved over the hollow connecting shaft 130 because relative rotation between the hollow connecting shaft 130 and the hollow core shaft 140 is stopped when the first protruding portions 133 contact the second protruding portions 146.

The elastic element 150 is disposed between the second end 132 of the hollow connecting shaft 130 and the second end 142 of the hollow core shaft 140. In a preferred embodiment of the present invention, the elastic element is a torque spring, and a wire profile of the torque spring may be circular, elliptical, or rectangular. When the wire profile of the torque spring is rectangular, two end surfaces of the torque spring may be grinded so as to enhance an axial positioning capability of the torque spring and control a free length of the spring more precisely. The hollow connecting shaft 130 is provided with a stop wall 134 in a concave manner on an inner circumferential wall surface of the second end 132 (as shown in FIG. 3) so that one end of the elastic element 150 can abut against the stop wall 134, and the elastic element 150 may also be fixedly connected to the stop wall 134. In addition, The hollow core shaft 140 is also provided with a stop wall 147 on an inner side of the protruding ring 145 of the second end 142 (as shown in **FIG. 4**) so that the other end of the elastic element 150 can abut against the stop wall 147, and the elastic element 150 may also be fixedly connected to the stop wall 147. When the two ends of the elastic element 150 are fixedly connected to the stop wall 134 of the hollow connecting shaft 130 and the stop wall 147 of the hollow core shaft 140, relative rotation between the hollow connecting shaft 130 and the hollow core shaft 140 presses or stretches the elastic element 150; when the two ends of the elastic element 150 merely abut against but are not fixedly connected to the stop wall 134 of the hollow connecting shaft 130 or the stop wall 147 of the hollow core shaft 140, relative rotation between the hollow connecting shaft 130 and the hollow core shaft 140 only presses the elastic element 150.

The tight-fit component 160 is a C-shaped retaining ring; the C-shaped retaining ring is sleeved over the outer circumferential wall surface of the first end 141 of the hollow core shaft 140 in a tight-fit manner, and is tightly fit with a tail end surface of the first end 131 of the hollow connecting shaft 130. Therefore, under a friction between the tight-fit component 160 and the end surface of the first end 131 of the hollow connecting shaft 130 and a friction between the tight-fit component 160 and the outer circumferential wall surface of the first end 141 of the hollow core shaft 140, the hollow connecting shaft 130 and the hollow core shaft 140 drive each other and corotate coaxially, as shown in FIG. 3.

A positioning casing 170 is further sleeved over the first ball bearing 143, and the positioning casing 170 is a hollow annular pipe provided with a protruding ring 171 at one end; therefore, the protruding ring 171 penetrates the first ball bearing 143 and provides an abutting and cushioning function when the pulley 10 is installed on an alternator, and an axial position of the pulley 10 on the alternator is limited by the positioning casing 170.

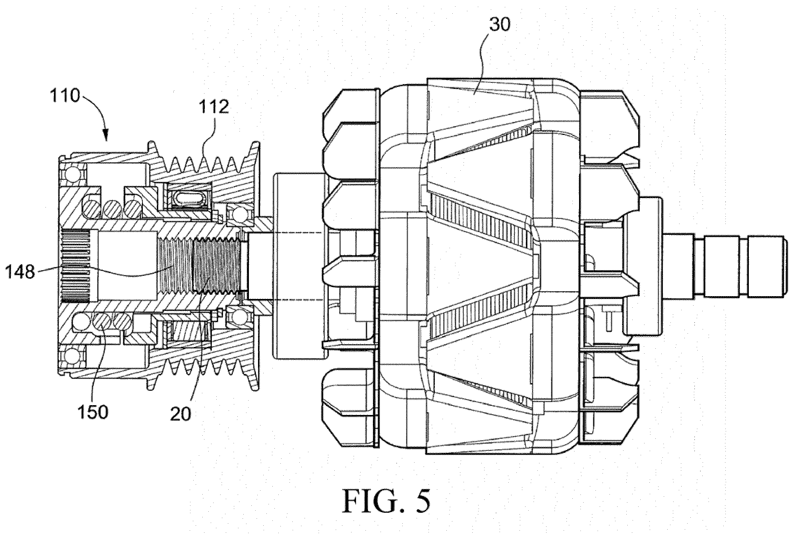

The hollow core shaft 140 is provided with a threaded surface 148 on an inner circumferential wall surface thereof, the threaded surface 148 may be screwed with a joint lever 20 having corresponding threads, and the joint lever 20 is connected to a rotor 30 of the alternator so that the hollow core shaft 140 and the rotor 30 corotate synchronously (as shown in **FIG.** 5). In addition, an end, corresponding to the second end 142 of the hollow core shaft 140, of the outer wheel 110 is arranged with a dust cover 184 so as to prevent external dust from entering the outer wheel 110.

With the structure described above, when a mechanical energy generating source provides an external force to drive the outer wheel 110 to rotate, the outer wheel 110 rotates relative to the hollow connecting shaft 130 in the first relative rotation direction and drives, through the clutch wheel 120, the hollow connecting shaft 130 to rotate synchronously, and with the friction provided by the tight-fit component 160, the hollow connecting shaft 130 drives the hollow core shaft 140 to rotate. At this time, if the friction provided by the tight-fit component 160 is insufficient to drive the hollow core shaft 140 to rotate, the hollow connecting shaft 130 rotates relative to the hollow core shaft 140, which causes the stop wall 134 at the second end 132 of the hollow connecting shaft 130 to press the elastic element 150, and while being pressed, the elastic element 150 pushes the stop wall 147 at the second end 142 of the hollow core shaft 140, thereby driving the hollow core shaft 140 to rotate. At this time, if a relative rotation angle between the hollow connecting shaft 130 and the hollow core shaft 140 exceeds a predetermined value (for example, 120 degrees), the first protruding portion 133 of the hollow connecting shaft 130 contacts the second protruding portion 146 of the hollow core shaft 140, thereby stopping relative rotation between the hollow connecting shaft 130 and the hollow core shaft 140 so as to avoid pressing the elastic element 150 excessively and damaging the structure thereof, and to set the hollow connecting shaft 130 and the hollow core shaft 140 in a synchronous co-rotational relationship; the hollow core shaft 140 also drives the rotor 30 to rotate so that the alternator generates an induced current.

In addition, if the outer wheel 110 is originally in a rotation state, when the mechanical energy generating source provides an external force to accelerate the rotation of the outer wheel 110, an operating principle of the pulley 10 of the present invention is substantially the same as the aforementioned operating principle in the case of starting the outer wheel 110 to rotate, and therefore it is not repeated herein.

On the contrary, when the external force stops driving the outer wheel 110 to rotate, the hollow core shaft 140 continues to rotate due to inertia of the rotor 30. At this time, the hollow core shaft 140 drives, by using the friction provided by the tight-fit component 160, the hollow connecting shaft 130 to rotate relative to the outer wheel 110 in the second relative rotation direction so that the hollow connecting shaft 130 is disassociated from the co-rotational relationship with the outer wheel 110. At this time, if the friction provided by the tight-fit component 160 is insufficient to drive the hollow connecting shaft 130 to rotate, the hollow core shaft 140 rotates relative to the hollow connecting shaft 130; if the elastic element 150 merely abuts against but is not fixedly connected to the hollow connecting shaft 130 and the hollow core shaft 140, the hollow core shaft 140 keeps rotating relative to the hollow connecting shaft 130 until the second protruding portion 146 of the hollow core shaft 140 contacts the first protruding portion 133 of the hollow connecting shaft 130, thereby stopping relative rotation between the hollow connecting shaft 130 and the hollow core shaft 140 and setting the hollow connecting shaft 130 and the hollow core shaft 140 in a synchronous co-rotational relationship so that the hollow connecting shaft 130 and the hollow core shaft 140 rotate relative to the outer wheel 110 in the second relative rotation direction.

If the elastic element 150 is fixedly connected to the hollow connecting shaft 130 and the hollow core shaft 140, when the friction provided by the tight-fit component 160 is insufficient to drive the hollow connecting shaft 130 to rotate, the hollow core shaft 140 rotates relative to the hollow connecting shaft 130 and stretches the elastic element 150, and while being stretched, the elastic element 150 pulls the second end 132 of the hollow connecting shaft 130, thereby driving the hollow connecting shaft 130 to rotate relative to the outer wheel 110 in the second relative rotation direction so that the hollow connecting shaft 130 is disassociated from the co-rotational relationship with the outer wheel 110. At this time, if rotation of the hollow connecting shaft 130 relative to the hollow core shaft 140 exceeds a predetermined value (for example, 120 degrees), the first protruding portion 133 of the hollow connecting shaft 130 contacts the second protruding portion 146 of the hollow core shaft 140, thereby stopping relative rotation between the hollow connecting shaft 130 and the hollow core shaft 140 so as to avoid stretching the elastic element 150 excessively and damaging the structure thereof, and to set the hollow connecting shaft 130 and the hollow core shaft 140 in a synchronous co-rotational relationship so that the hollow connecting shaft 130 and the hollow core shaft 140 rotate relative to the outer wheel 110 in the second relative rotation direction.

In addition, if the external force driving the outer wheel 110 decreases, the operating principle of the pulley 10 of the present invention is substantially the same as the aforementioned operating principle in the case in which the outer wheel 110 stops rotating, and therefore it is not repeated herein.

In the pulley 10 of the present invention, a belt (not shown in the figure) may be wound on the belt groove 112 of the outer wheel 110 so that the mechanical energy generating source can provide an external force to drive the belt, thereby driving the outer wheel 110 to rotate. In addition, the pulley 10 of the present invention is applicable to an alternator system, such as a power generation system and an alternator system of a vehicle. The pulley of the present invention is especially suitable to be used as a stator structure of an automotive alternator. When the pulley of the present invention is applied to an automotive alternator, the mechanical energy generating source is an automobile engine.

In a preferred embodiment of the present invention, the tight-fit component 160 of the pulley 10 of the present invention may be omitted, and two ends of the elastic element 150 are fixedly connected to the stop wall 147 at the second end 142 of the hollow core shaft 140 and the stop wall 134 at the second end 132 of the hollow connecting shaft 130. In this manner, when an external force drives the outer wheel 110 to rotate, the outer wheel 110 rotates relative to the hollow connecting shaft 130 in the first relative rotation direction and drives, through the clutch wheel 120, the hollow connecting shaft 130 to rotate synchronously; the second end 132 of the hollow connecting shaft 130 presses the elastic element 150, and while being pressed, the elastic element 150 pushes the stop wall 147 at the second end 142 of the hollow core shaft 140, thereby driving the hollow core shaft 140 to rotate. At this time, if a rotation angle of the hollow connecting shaft 130 relative to the hollow core shaft 140 exceeds a predetermined value, the first protruding portion 133 of the hollow connecting shaft 130 contacts the second protruding portion 146 of the hollow core shaft 140, thereby stopping relative rotation between the hollow connecting shaft 130 and the hollow core shaft 140 so as to prevent the elastic element 150 from being pressed excessively, setting the hollow connecting shaft 130 and the hollow core shaft 140 in a synchronous co-rotational relationship, and drive the rotor 30 to rotate.

On the contrary, when the external force decreases or stops driving the outer wheel 110 to rotate, the hollow core shaft 140 continues to rotate due to inertia of the rotor 30 and stretches the elastic element 150, and while being stretched, the elastic element 150 pulls the second end 132 of the hollow connecting shaft 130, thereby driving the hollow connecting shaft 130 to rotate relative to the outer wheel 110 in the second relative rotation direction so that the hollow connecting shaft 130 is disassociated from the co-rotational relationship with the outer wheel 110 and idles in the clutch wheel 120. At this time, if a rotation angle of the hollow connecting shaft 130 relative to the hollow core shaft 140 exceeds a predetermined value, the first protruding portion 133 of the hollow connecting shaft 130 contacts the second protruding portion 146 of the hollow core shaft 140, thereby stopping relative rotation between the hollow connecting shaft 130 and the hollow core shaft 140 so as to prevent the elastic element 150 from being stretched excessively, and to set the hollow connecting shaft 130 and the hollow core shaft 140 in a synchronous co-rotational relationship, in which the hollow connecting shaft 130 and the hollow core shaft 140 idle in the outer wheel 110. In addition, in a preferred embodiment of the present invention, in the pulley 10 of the present invention, the first protruding portion 133 and the second protruding portion 146 may not be disposed, the protruding ring 145 at the second end 142 of the hollow core shaft 140 is directly sleeved over the second end 132 of the hollow connecting shaft 130, and two ends of the elastic element 150 are fixedly connected to the stop wall 147 at the second end 142 of the hollow core shaft 140 and the stop wall 134 at the second end 132 of the hollow connecting shaft 130. Therefore, when an external force drives the outer wheel 110 to rotate, the outer wheel 110 rotates relative to the hollow connecting shaft 130 in the first relative rotation direction and drives, through the clutch wheel 120, the hollow connecting shaft 130 to rotate synchronously, and the hollow connecting shaft 130 drives, through the tight-fit component 160, the hollow core shaft 140 to rotate. At this time, if the friction provided by the tight-fit component 160 is insufficient to drive the hollow core shaft 140 to rotate, the stop wall 134 at the second end 132 of the hollow connecting shaft 130 presses the elastic element 150, and while being pressed, the elastic element 150 pushes the stop wall 147 at the second end 142 of the hollow core shaft 140, thereby driving the hollow core shaft 140 to rotate, so as to drive the rotor 30 of the alternator to rotate.

On the contrary, when the external force decreases or stops driving the outer wheel 110 to rotate, the hollow core shaft 140 continues to rotate due to inertia of the rotor 30 and drives, through the tight-fit component 160, the hollow connecting shaft 130 to rotate relative to the outer wheel 110 in the second relative rotation direction. At this time, if the friction provided by the tight-fit component 160 is insufficient to drive the hollow connecting shaft 130 to rotate, the hollow core shaft 140 stretches the elastic element 150, and while being stretched, the elastic element 150 pulls the second end 132 of the hollow connecting shaft 130, thereby driving the hollow connecting shaft 130 to rotate relative to the outer wheel 110 in the second relative rotation direction so that the hollow connecting shaft 130 is disassociated from the co-rotational relationship with the outer wheel 110 and idles in the clutch wheel 120.

Further, in a preferred embodiment of the present invention, in the pulley 10 of the present invention, the tight-fit component 160, the first protruding portion 133, and the second protruding portion 146 may not be disposed; the protruding ring 145 at the second end 142 of the hollow core shaft 140 is directly sleeved over the second end 132 of the hollow connecting shaft 130, and two ends of the elastic element 150 are fixedly connected to the stop wall 147 at the second end 142 of the hollow core shaft 140 and the stop wall 134 at the second end 132 of the hollow connecting shaft 130. In this manner, when an external force drives the outer wheel 110 to rotate, the outer wheel 110 rotates relative to the hollow connecting shaft 130 in the first relative rotation direction and drives, through the clutch wheel 120, the hollow connecting shaft 130 to rotate synchronously; the stop wall 134 at the second end 132 of the hollow connecting shaft 130 presses the elastic element 150, and while being pressed, the elastic element 150 pushes the stop wall 147 at the second end 142 of the hollow core shaft 140, thereby driving the hollow core shaft 140 to rotate.

On the contrary, when the external force decreases or stops driving the outer wheel 110 to rotate, the hollow core shaft 140 continues to rotate due to inertia of the rotor 30 and stretches the elastic element 150, and while being stretched, the elastic element 150 pulls the second end 132 of the hollow connecting shaft 130, thereby driving the hollow connecting shaft 130 to rotate relative to the outer wheel 110 in the second relative rotation direction so that the hollow connecting shaft 130 is disassociated from the co-rotational relationship with the outer wheel 110 and idles in the clutch wheel 120.

Although the present invention and advantages thereof are described in detail above, it should be understood that variations, alternative solutions, and modifications can be made herein without departing from the scope of the present invention which are defined in the appended patent application scope. Moreover, the scope of the present invention is not limited to the specific implementations of the process, machine, product, material composition, means, method, and steps described in the specification. For example, persons skilled in the art can easily learn from the disclosure of the present invention that existing or to-be-developed processes, machines, products, material compositions, means, methods and steps that substantially implement the same function or substantially achieve the same result as the corresponding implementation manner described herein may be used. Correspondingly, the appended patent application scope is intended to cover such processes, machines, products, material compositions, means, methods or steps.

## Claims

1. A pulley (10) for an alternator, including:
an outer wheel (110), provided with an axle hole (111) at the center;
a clutch wheel (120), fixedly disposed in the axle hole of the outer wheel and having a pivot hole (121);
a hollow connecting shaft (130), having a first end (131) and a second end (132), wherein the first end is rotatably disposed in the pivot hole of the clutch wheel so that the hollow connecting shaft maintains a co-rotational relationship with the outer wheel in a first relative rotation direction by means of the clutch wheel, while in a second relative rotation direction, the hollow connecting shaft is disassociated from the co-rotational relationship with the outer wheel, and presents an idling state;
a hollow core shaft (140), having a first end (141) and a second end (142), wherein the hollow core shaft is rotatably received in the outer wheel, and the second end of the hollow core shaft is rotatably arranged at the second end of the hollow connecting shaft; and
an elastic element (150), disposed between the second end of the hollow connecting shaft and the second end of the hollow core shaft;
wherein when an external force drives the outer wheel to rotate, the outer wheel rotates relative to the hollow connecting shaft in the first relative rotation direction and drives, through the clutch wheel, the hollow connecting shaft to rotate synchronously; the second end of the hollow connecting shaft presses the elastic element, and while being pressed, the elastic element pushes the second end of the hollow core shaft, thereby driving the hollow core shaft to rotate; and
when the external force decreases or stops driving the outer wheel to rotate, the hollow core shaft continues to rotate due to inertia, and stretches the elastic element, and while being stretched, the elastic element pulls the second end of the hollow connecting shaft, thereby driving the hollow connecting shaft to rotate relative to the outer wheel in the second relative rotation direction so that the hollow connecting shaft is disassociated from the co-rotational relationship with the outer wheel and idles in the clutch wheel, the pulley **characterized in that**:
the second end (132) of the hollow connecting shaft (130) is provided with a first protruding portion (133), and the second end (142) of the hollow core shaft (140) is provided with a corresponding second protruding portion (146); the number of one of the first protruding portion and the second protruding portion is at least one, and the number of the other of the first protruding portion and the second protruding portion is at least two; and when a rotation angle of the hollow connecting shaft relative to the hollow core shaft exceeds a predetermined value, the first protruding portion of the hollow connecting shaft contacts the second protruding portion of the hollow core shaft, thereby stopping relative rotation between the hollow connecting shaft and the hollow core shaft and setting the hollow connecting shaft and the hollow core shaft in a synchronous co-rotational relationship.

2. The pulley (10) for an alternator according to claim 1, wherein the hollow core shaft (140) passes through the hollow connecting shaft (130), and the first end (141) of the hollow core shaft protrudes from the first end (131) of the hollow connecting shaft; a tight-fit component (160) is sleeved over an outer circumferential wall surface of the first end of the hollow core shaft in a tight-fit manner, and the tight-fit component is also tightly fit with an end surface of the first end of the hollow connecting shaft; the hollow connecting shaft and the hollow core shaft are made to corotate coaxially under a friction between the tight-fit component (160) and the hollow connecting shaft and a friction between the tight-fit component and the hollow core shaft, and when the external force decreases or stops driving the outer wheel (110) to rotate, the hollow core shaft continues to rotate due to inertia and drives, through the tight-fit component, the hollow connecting shaft to rotate relative to the outer wheel in the second relative rotation direction so that the hollow connecting shaft is disassociated from the co-rotational relationship with the outer wheel and idles in the clutch wheel (120).

3. The pulley (10) for an alternator according to claim 2, wherein the tight-fit component (160) is a C-shaped retaining ring (162).

4. The pulley (10) for an alternator according to one of claims 1-3, wherein a first ball bearing (143) is sleeved over the first end (141) of the hollow core shaft (140), a second ball bearing (144) is sleeved over the second end (142) of the hollow core shaft, and the first ball bearing and the second ball bearing are disposed between the hollow core shaft and the outer wheel (110) so that the hollow core shaft is rotatable relative to the outer wheel.

5. The pulley (10) of claim 4, wherein three grooves are provided in a concave manner on an inner circumferential wall surface of the outer wheel (110), and an anaerobic adhesive is coated in the grooves so that the clutch wheel (120), the first ball bearing (143), and the second ball bearing (144) are separately tightly fit in the grooves and are fixedly glued in the outer wheel by using the anaerobic adhesive.

6. The pulley (10) of claim 4, wherein a positioning casing (170) is further sleeved over the first ball bearing (143), and an axial position of the pulley on the alternator is limited by the positioning casing.

7. The pulley (10) for an alternator according to any of claims 1-6, wherein an outer circumferential wall surface of the outer wheel (110) is provided with a belt groove (112) for a belt to be wound on.

8. The pulley (10) for an alternator according to claim 7, wherein the belt is connected to a mechanical energy generating source, and the mechanical energy generating source provides an external force to drive the belt, thereby driving the outer wheel (110) to rotate.

9. The pulley (10) for an alternator according to any one of claims 1-8, wherein an inner circumferential wall surface of the hollow core shaft (140) is provided with a threaded surface (148), the threaded surface is screwed with a joint lever (20) having corresponding threads, and the joint lever is connected to a rotor (30) so that the hollow core shaft and the rotor corotate synchronously.

10. The pulley (10) of claim 1,
wherein an inner circumferential wall surface of the outer wheel (110) is provided with a step portion (113), for the clutch wheel (120) to abut against, thereby limiting an axial displacement of the clutch wheel.

11. The pulley (10) of claim 1,
wherein one end of the clutch wheel (120) is provided with a positioning member (183, 185) to limit an axial position of the clutch wheel and the positioning member is a C-shaped retaining ring (162).

12. The pulley (10) for an alternator according to any one of claims 1-11, wherein two sides of the clutch wheel (120) are each provided with an oil seal element (181, 182) so as to prevent liquid in the clutch wheel from flowing into the outer wheel (110).

13. The pulley (10) of claim 12, wherein one side of one of the oil seal elements (181, 182) is provided with a positioning member (183, 185), and the positioning member is sleeved over an inner side wall surface of the outer wheel (110) in a tight-fit manner to limit axial positions of the oil seal elements.

14. The pulley (10) for an alternator according to any one of claims 1-13, wherein an end, corresponding to the second end (142) of the hollow core shaft (140), of the outer wheel (110) is arranged with a dust cover (184), so as to prevent external dust from entering the outer wheel.

## Patentansprüche

1. Riemenscheibe (10) für einen Generator, mit:
einem Außenrad (110), das in der Mitte mit einer Wellenbohrung (111) versehen ist;
einem Kupplungsrad (120), das in der Wellenbohrung des Außenrads fest angeordnet ist und eine Drehbohrung (121) aufweist;
einer hohlen Verbindungswelle (130) mit einem ersten Ende (131) und einem zweiten Ende (132), wobei das erste Ende drehbar in der Drehbohrung des Kupplungsrads derart angeordnet ist, dass die hohle Verbindungswelle mit dem Außenrad eine Anordnungsbeziehung für ein gemeinsames Drehen in einer ersten relativen Drehrichtung mittels des Kupplungsrads aufrechterhält, während in einer zweiten relativen Drehrichtung die hohle Verbindungswelle von der Anordnungsbeziehung für ein gemeinsames Drehen mit dem Außenrad entkoppelt ist, und einen Leerlaufzustand annimmt;
einer hohlen Kernwelle (140) mit einem ersten Ende (141) und einem zweiten Ende (142), wobei die hohle Kernwelle in dem Außenrad drehbar aufgenommen ist und das zweite Ende der hohlen Kernwelle an dem zweiten Ende der hohlen Verbindungswelle drehbar angeordnet ist; und
einem elastischen Element (150), das zwischen dem zweiten Ende der hohlen Verbindungswelle und dem zweiten Ende der hohlen Kernwelle angeordnet ist;
wobei, wenn eine externe Kraft das Außenrad in Drehung versetzt, das Außenrad sich relativ zu der hohlen Verbindungswelle in der ersten relativen Drehrichtung dreht und über das Kupplungsrad die hohle Verbindungswelle für ein synchrones Drehen antreibt; das zweite Ende der hohlen Verbindungswelle das elastische Element mit Druck beaufschlagt, und bei Druckbeaufschlagung das elastische Element auf das zweite Ende der hohlen Kernwelle drückt, wodurch die hohle Kernwelle angetrieben und in Drehung versetzt wird; und
wenn die externe Kraft abnimmt oder aufhört, das Außenrad anzutreiben und in Drehung zu versetzen, die hohle Kernwelle sich aufgrund der Trägheit weiter dreht und das elastische Element dehnt, und wobei bei Dehnung das elastische Element an dem zweiten Ende der hohlen Verbindungswelle zieht und dadurch die hohle Verbindungswelle antreibt, sich relativ zu dem Außenrad in der zweiten relativen Drehrichtung derart zu drehen, dass die hohle Verbindungswelle aus der Anordnungsbeziehung für ein gemeinsames Drehen mit dem Außenrad entkoppelt wird und in dem Kupplungsrad im Leerlauf ist, wobei die Riemenscheibe **dadurch gekennzeichnet ist, dass**:
das zweite Ende (132) der hohlen Verbindungswelle (130) mit einem ersten hervorstehenden Bereich (133) versehen ist, und das zweite Ende (142) der hohlen Kernwelle (140) mit einem entsprechenden zweiten hervorstehenden Bereich (146) versehen ist; der erste hervorstehende Bereich oder der zweite hervorstehende Bereich mit einer Anzahl von mindestens eins vorgesehen ist, und der andere Bereich des ersten hervorstehenden Bereichs und des zweiten hervorstehenden Bereichs mit einer Anzahl von mindestens zwei vorgesehen ist; und wenn ein Drehwinkel der hohlen Verbindungswelle relativ zu der hohlen Kernwelle einen vorbestimmten Wert übersteigt, der erste hervorstehende Bereich der hohlen Verbindungswelle mit dem zweiten hervorstehenden Bereich der hohlen Kernwelle in Kontakt tritt, wodurch die relative Drehung zwischen der hohlen Verbindungswelle und der hohlen Kernwelle unterbrochen wird und die hohle Verbindungswelle und die hohle Kernwelle in eine Anordnungsbeziehung für ein synchrones gemeinsames Drehung versetzt werden.

2. Riemenscheibe (10) für einen Generator nach Anspruch 1, wobei die hohle Kernwelle (140) durch die hohle Verbindungswelle (130) verläuft, und das erste Ende (141) der hohlen Kernwelle aus dem ersten Ende (131) der hohlen Verbindungswelle hervorsteht; eine erste Passkomponente (160) über eine Außenumfangswandfläche des ersten Endes der hohlen Kernwelle formschlüssig aufgeschoben ist, und die Passkomponente auch mit einer Stirnfläche des ersten Endes der hohlen Verbindungswelle formschlüssig ist; die hohle Verbindungswelle und die hohle Kernwelle so ausgebildet sind, dass sie durch Reibung zwischen der Passkomponente (160) und der hohlen Verbindungswelle und durch Reibung zwischen der Passkomponente und der hohlen Kernwelle koaxial gemeinsam Drehung versetzt werden, und wenn die externe Kraft abnimmt oder aufhört, das Außenrad (110) anzutreiben und in Drehung zu versetzen, die hohle Kernwelle sich aufgrund der Trägheit weiter dreht und über die Passkomponente die hohle Verbindungswelle so antreibt, dass sie sich relativ zu dem Außenrad in der zweiten relativen Drehrichtung derart dreht, dass die hohle Verbindungswelle aus der Anordnungsbeziehung für ein gemeinsames Drehen mit dem Außenrad entkoppelt wird und in dem Kupplungsrad (120) frei läuft.

3. Riemenscheibe (10) für einen Generator nach Anspruch 2, wobei die Passkomponente (160) ein C-förmiger Haltering (162) ist.

4. Riemenscheibe (10) für einen Generator nach einem der Ansprüche 1-3, wobei ein erstes Kugellager (143) über das erste Ende (141) der hohlen Kernwelle (140) geschoben ist, ein zweites Kugellager (144) über das zweite Ende (142) der hohlen Kernwelle geschoben ist, und das erste Kugellager und das zweite Kugellager zwischen der hohlen Kernwelle und dem Außenrad (110) derart angeordnet sind, dass die hohle Kernwelle relativ zu dem Außenrad drehbar ist.

5. Riemenscheibe (10) nach Anspruch 4, wobei drei Nuten in konkaver Weise auf einer Innenumfangswandfläche des Außenrads (110) vorgesehen sind, und ein anaerobes Haftmittel in den Nuten derart aufgebracht ist, dass das Kupplungsrad (120), das erste Kugellager (143) und das zweite Kugellager (144) separat fest in die Nuten eingepasst sind und starr mit dem Außenrad unter Anwendung des anaeroben Haftmittels verklebt sind.

6. Riemenscheibe nach Anspruch 4, wobei ein Positioniergehäuse (170) ferner über das erste Kugellager (143) geschoben ist, und eine aktuelle Position der Riemenscheibe an dem Generator durch das Positioniergehäuse begrenzt ist.

7. Riemenscheibe (10) für einen Generator nach einem der Ansprüche 1-6, wobei eine Außenumfangswandfläche des Außenrads (110) mit einer Riemennut (112) für einen Riemen, der darin zu führen ist, vorgesehen ist.

8. Riemenscheibe (10) für einen Generator nach Anspruch 7, wobei der Riemen mit einer Quelle zur Erzeugung mechanischer Energie verbunden ist und die Quelle zur Erzeugung mechanischer Energie eine externe Kraft zum Antreiben des Riemens bereitstellt, sodass das Außenrad (110) angetrieben und in Drehung versetzt wird.

9. Riemenscheibe (10) für einen Generator nach einem der Ansprüche 1-8, wobei eine Innenumfangswandfläche der hohlen Kernwelle (140) mit einer Gewindefläche (148) versehen ist, wobei die Gewindefläche mit einem Gelenkhebel (20) mit entsprechendem Gewinde verschraubt ist, und der Gelenkhebel mit einem Rotor (30) derart verbunden ist, dass die hohle Kernwelle und der Rotor sich gemeinsam synchron drehen.

10. Riemenscheibe (10) nach Anspruch 1, wobei eine Innenumfangswandfläche des Außenrads (110) mit einem Stufenbereich (113) versehen ist, der als Anschlag für das Kupplungsrad (120) dient, wodurch eine axiale Verschiebung des Kupplungsrads begrenzt wird.

11. Riemenscheibe (10) nach Anspruch 1, wobei ein Ende des Kupplungsrads (120) mit einem Positionierelement (183, 185) zum Begrenzen einer axialen Position des Kupplungsrads versehen ist und wobei das Positionierelement ein C-förmiger Haltering (162) ist.

12. Riemenscheibe (10) für einen Generator nach einem der Ansprüche 1-11, wobei zwei Seiten des Kupplungsrads (120) jeweils mit einem Öldichtungselement (181, 182) derart versehen sind, dass in dem Kupplungsrad ein Strömen von Flüssigkeit in das Außenrad (110) verhindert wird.

13. Riemenscheibe (10) nach Anspruch 12, wobei eine Seite eines der Öldichtungselemente (181, 182) mit einem Positionierelement (183, 185) versehen ist, und das Positionierelement formschlüssig über eine Innenseitenwandfläche des Außenrads (110) geschoben ist, um axiale Positionen der Öldichtungselemente zu begrenzen.

14. Riemenscheibe (10) für einen Generator nach einem der Ansprüche 1-13, wobei ein Ende des Außenrads (110), das dem zweiten Ende (142) der hohlen Kernwelle (140) entspricht, mit einer Staubabdeckung (184) zur Verhinderung des Eindringens von Staub von außen in das Außenrad versehen ist.

## Revendications

1. Poulie (10) pour alternateur, comprenant :
une roue extérieure (110) pourvue d'un trou d'axe (111) au centre ;
une roue d'embrayage (120) disposée fixement dans le trou d'axe de la roue extérieure et comportant un trou de pivotement (121) ;
un arbre de connexion creux (130) doté d'une première extrémité (131) et d'une seconde extrémité (132), la première extrémité étant disposée de manière à pouvoir tourner dans le trou de pivotement de la roue d'embrayage afin que l'arbre de connexion creux maintienne une relation de rotation conjointe avec la roue extérieure dans un premier sens de rotation relatif au moyen de la d'embrayage alors que, dans un second sens de rotation relatif, l'arbre de connexion creux est dissocié de la relation de rotation conjointe avec la roue extérieure et présente un état inactif ;
un arbre à noyau creux (140) doté d'une première extrémité (141) et d'une seconde extrémité (142), l'arbre à noyau creux étant reçu de manière à pouvoir tourner dans la roue extérieure, et la seconde extrémité de l'arbre à noyau creux étant disposée de manière à pouvoir tourner à la seconde extrémité de l'arbre de connexion creux ; et
un élément élastique (150) disposé entre la seconde extrémité de l'arbre de connexion creux et la seconde extrémité de l'arbre à noyau creux ;
dans lequel, lorsqu'une force externe entraîne la roue extérieure en rotation, la roue extérieure tourne par rapport à l'arbre de connexion creux dans le premier sens de rotation relatif et entraîne, par l'intermédiaire de la roue d'embrayage, l'arbre de connexion creux en rotation synchrone ; la seconde extrémité de l'arbre de connexion creux comprime l'élément élastique et, en étant comprimé, l'élément élastique pousse la seconde extrémité de l'arbre à noyau creux en entraînant ainsi l'arbre à noyau creux en rotation ; et
lorsque la force externe diminue ou cesse d'entraîner la roue extérieure en rotation, l'arbre à noyau creux continue de tourner en raison de l'inertie et étire l'élément élastique et, en étant étiré, l'élément élastique tire la seconde extrémité de l'arbre de connexion creux en entraînant ainsi l'arbre de connexion creux en rotation par rapport à la roue extérieure dans le second sens de rotation relatif de manière à ce que l'arbre de connexion creux soit dissocié de la relation de rotation conjointe avec la roue extérieure est soit inactif dans la roue d'embrayage, la poulie étant **caractérisée en ce que** :
la seconde extrémité (132) de l'arbre de connexion creux (130) est pourvue d'une première section saillante (133), et la seconde extrémité (142) de l'arbre de connexion creux (140) est pourvue d'une seconde section saillante correspondante (146); le nombre de sections parmi la première section saillante et la seconde section saillante étant d'au moins une, et le nombre de l'autre parmi la première section saillante et la seconde section saillante étant d'au moins deux ; et, lorsqu'un angle de rotation de l'arbre de connexion creux par rapport à l'arbre à noyau creux excède une valeur prédéterminée, la première section saillante de l'arbre de connexion creux vient en contact avec la seconde section saillante de l'arbre de connexion creux, en stoppant ainsi le mouvement relatif entre l'arbre de connexion creux et l'arbre à noyau creux et en mettant l'arbre de connexion creux et l'arbre à noyau creux en relation synchrone de rotation conjointe.

2. Poulie (10) pour alternateur selon la revendication 1, dans laquelle l'arbre à noyau creux 140) passe à travers l'arbre de connexion creux (130), et la première extrémité (141) de l'arbre à noyau creux dépasse de la première extrémité (131) de l'arbre de connexion creux ; un composant à ajustement serré (160) est emmanché sur une surface de paroi circonférentielle extérieure de la première extrémité l'arbre à noyau creux en ajustement serré et le composant à ajustement serré est aussi étroitement ajusté dans une surface terminale de la première extrémité de l'arbre de connexion creux ; l'arbre de connexion creux et l'arbre à noyau creux sont amenés à tourner conjointement sous friction entre le composant à ajustement serré (160) et l'arbre de connexion creux et friction entre le composant à ajustement serré et l'arbre à noyau creux et, lorsque la force externe diminue ou cesse d'entraîner la roue extérieure (110) en rotation, l'arbre à noyau creux continue de tourner en raison de l'inertie et entraîne, par l'intermédiaire du composant à ajustement serré, l'arbre de connexion creux en rotation par rapport à la roue extérieure dans le second sens de rotation relatif, de sorte que l'arbre de connexion creux est dissocié de la relation de rotation conjointe avec la roue extérieure et est inactif dans la roue d'embrayage (120).

3. Poulie (10) pour alternateur selon la revendication 2, dans laquelle le composant à ajustement serré (160) est un anneau de retenue en forme de C (162).

4. Poulie (10) pour alternateur selon une des revendications 1 à 3, dans laquelle un premier roulement à billes (143) est emmanché sur la première extrémité (141) de l'arbre à noyau creux (140), un second roulement à billes (144) est emmanché sur la seconde extrémité (142) de l'arbre à noyau creux, et le premier roulement à billes et le second roulement à billes sont disposés entre l'arbre à noyau creux et la roue extérieure (110).de manière à ce que l'arbre à noyau creux puisse tourner par rapport à la roue extérieure.

5. Poulie (10) selon la revendication 4, dans laquelle trois gorges sont prévues en forme concave sur une surface de paroi circonférentielle intérieure de la roue extérieure (110), et un adhésif anaérobie est appliqué dans les gorges de manière à ce que la roue d'embrayage (120), le premier roulement à billes (143), et le second roulement à billes (144) soient séparément étroitement ajustés dans les gorges et soient collés fixement dans la roue extérieure en utilisant l'adhésif anaérobie.

6. Poulie selon la revendication 4, dans laquelle un compartiment de positionnement (170) est en outre emmanché sur le premier roulement à billes (143), et une position axiale de la poulie sur l'alternateur est limitée par le compartiment de positionnement.

7. Poulie (10) pour alternateur selon l'une quelconque des revendications 1 à 6, dans laquelle une surface de paroi circonférentielle extérieure de la roue extérieure (110) est pourvue d'une rainure de courroie (112) pour y enrouler une courroie.

8. Poulie (10) pour alternateur selon la revendication 7, dans laquelle la courroie est connectée à une source génératrice d'énergie mécanique, et la source génératrice d'énergie mécanique produit une force externe pour entraîner la courroie, en entraînant ainsi la roue extérieure (110) en rotation.

9. Poulie (10) pour alternateur selon l'une quelconque des revendications 1 à 8, dans laquelle une surface de paroi circonférentielle intérieure de l'arbre à noyau creux (140) est pourvue d'une surface filetée (148), la surface filetée étant vissée à un levier à genouillère (20) doté de filetages correspondants et le levier à genouillère est connecté à un rotor (30) pour que l'arbre à noyau creux et le rotor tournent conjointement de manière synchrone.

10. Poulie (10) selon la revendication 1,
dans laquelle une surface de paroi circonférentielle intérieure de la roue extérieure (110) est pourvue d'une section à échelon (113) pour que la roue d'embrayage (120) bute dessus, en limitant ainsi un déplacement axial de la roue d'embrayage

11. Poulie (10) selon la revendication 1,
dans laquelle une extrémité de la roue d'embrayage (120) est pourvue d'un élément de positionnement (183, 185) pour limiter une position axiale de la roue d'embrayage et l'élément de positionnement est un anneau de retenue en forme de C (162).

12. Poulie (10) pour alternateur selon l'une quelconque des revendications 1-11, dans laquelle deux faces de la roue d'embrayage (120) sont chacune pourvue d'un élément d'étanchéité d'huile (181, 182) afin d'empêcher le liquide présent dans la roue d'embrayage de s'écouler dans la roue extérieure.

13. Poulie (10) selon la revendication 12,
dans laquelle une face des éléments d'étanchéité d'huile (181, 182) est pourvue d'un élément de positionnement (183, 185), et l'élément de positionnement est emmanché sur une surface de paroi latérale intérieure de la roue extérieure (110) en ajustement serré de manière à limiter les positions axiales des éléments d'étanchéité d'huile.

14. Poulie (10) pour alternateur selon l'une quelconque des revendications 1 à 13, dans laquelle une extrémité correspondant à la seconde extrémité (142) de l'arbre à noyau creux (140) de la roue extérieure (110) est équipée d'un capot antipoussière (184) pour empêcher la poussière de l'extérieur d'entrer dans la roue extérieure.
